# EUROPÄISCHE PATENTSCHRIFT

(11) **EP 2 451 846 B1**
(45) Veröffentlichungstag und Bekanntmachung des Hinweises auf die Patenterteilung: **02.07.2014**
(21) Anmeldenummer: 10722064.2
(22) Anmeldetag: 25.05.2010
(51) Int. Cl.: C08F 2/16, C08F 2/18, C08F 20/10, C09D 143/04, C09J 143/04, C08F 30/08, C08F 230/08

(54) **COPOLYMERISATION VON SILYL-FUNKTIONELLEN KOMPONENTEN IN WÄSSRIGEN POLYMERISATIONSSYSTEMEN**
COPOLYMERIZATION OF SILYL FUNCTIONAL COMPONENTS IN AQUEOUS POLYMERIZATION SYSTEMS
COPOLYMÉRISATION DE COMPOSANTS À FONCTION SILYLE DANS DES SYSTÈMES DE POLYMÉRISATION AQUEUX

(30) Priorität: 10.07.2009 DE 102009027620
(43) Veröffentlichungstag der Anmeldung: 16.05.2012
(73) Patentinhaber: Evonik Röhm GmbH, 64293 Darmstadt (DE)
(72) Erfinder: BORGMANN, Cornelia, 07928 Chatham, NJ (US); POPPE, Dirk, 60385 Frankfurt am Main (DE); BALK, Sven, 60594 Frankfurt (DE); KELLER, Bruno, 55263 Wackernheim (DE); JANAS, Wolfgang, 63826 Geiselbach (DE)
(86) Internationale Anmeldenummer: PCT/EP2010/057123
(87) Internationale Veröffentlichungsnummer: WO 2011/003671

(56) Entgegenhaltungen:
- EP-A1- 0 943 634
- EP-A1- 2 241 582
- EP-A2- 0 841 355
- EP-A2- 0 932 083
- WO-A1-2004/011044
- US-A- 5 204 404

## Beschreibung

### Gebiet der Erfindung

Die vorliegende Erfindung betrifft die Synthese von Perlpolymerisaten auf (Meth)acrylatbasis, die Silylfunktionalitäten aufweisen, über eine Suspensionspolymerisation. Insbesondere betrifft die Erfindung die Synthese solcher silylfunktionalisierten Perlpolymerisate in einem wässrigen Medium, ohne dass es zu einer Vernetzung der Polymere kommt.

### Stand der Technik

Polymere mit Silylfunktionalitäten wie z.B. Trimethoxysilylgruppen spielen in Feuchtigkeitsvernetzenden Systemen eine große Rolle. Auch sind solche Gruppen für Ihre haftvermittelnden Eigenschaften z.B. gegenüber Glas, Keramik oder einigen Metalloxiden bekannt. Als Polymere finden zumeist entsprechende Polyether wie MS Polymer^{™} der Fa. Kaneka oder Polysiloxane Anwendung. Ein neuer Trend sind silylfunktionelle, einkomponentige Polyurethane, wie sie in EP 0 549 626 oder in WO 00/35981 beschrieben werden. Dabei werden wässrige, silylvernetzende Dispersionen aufgeführt, in denen auch Polymethacrylat-Polyurethane Verwendung finden können. Dies zeigt, welch großes Interesse an silylfunktionellen Polymethacrylaten für die Verwendung in wässrigen Systemen existiert. Es wird jedoch nicht beschrieben, wie ein solches Polymer auf einfachem, Lösungsmittel freiem Weg darstellbar ist.

Lösungspolymerisate, überwiegend aus (Meth)acrylaten bestehend und mit Silylgruppen funktionalisiert sind im Allgemeinen bekannt. Ein besonders bemerkenswertes Beispiel ist XMAP^{™} der Fa. Kaneka. Dabei handelt es sich um ein silyltelecheles Polyacrylat für die Verwendung in Dicht- oder Klebstoffen. Dieses wird nach der Lösungspolymerisation jedoch erst aufwendig gereinigt, bzw. das Lösungsmittel entfernt. Eine vollständige Entfernung volatiler Bestandteile ist, wie dem Fachmann bekannt ist, kaum möglich. Das gleiche gilt für alle mittels Lösungspolymerisation hergestellten Methacrylate, die vor der wässrigen Dispergierung erst aufwendig gereinigt werden müssen.

Ein Herstellungsverfahren, das auf einem wässrigen Polymerisationsmedium beruht, wie zum Beispiel die Emulsions- oder Suspensionspolymerisation unter Copolymerisation bzw. Einbau von feuchtigkeitsvernetzenden, Silylgruppen tragenden Komponenten, ist bis dato nicht beschrieben. Der Fachmann sollte erwarten, dass eine solches Polymerisationsverfahren zu einer sofortigen vernetzung des Polymerisats führen würde.

Um Silylgruppen in Poly(meth)acrylate einzubauen ist nach Stand der Technik die Lösungspolymerisation die Polymerisationstechnik der Wahl. Sie kann unter Ausschluss von Feuchtigkeit durchgeführt werden. Damit wird eine Hydrolyse der Alkoxysilylgruppen unterdrückt. Die Hydrolyse ist jedoch die nötige Vorstufe zur damit auch unterdrückten Vernetzungsreaktion. Ein Beispiel für die Copolymerisation Alkoxysilyl-funktioneller Monomere über eine, in diesem Fall kontrolliert radikalische, Lösungspolymerisation ist als stellvertretendes Beispiel in der noch nicht offengelegten Anmeldung DE 102008002016 nachzulesen. Nachteil der Lösungspolymerisation ist die Verwendung von Lösungsmitteln, die in der allgemeinen Diskussion stehen und entweder nach der Herstellung im Produkt verbleiben und somit die Formulierungsfreiheit stark einschränken, oder aber vor der Weiterverarbeitung entfernt werden müssen. Die Entfernung erfolgt zudem nur unter großem Aufwand vollständig.

Ganz ausgeschlossen für den direkten Einbau von Bausteinen mit Alkoxysilylgruppen in eine Polymerkette ohne anschließende Vernetzungsreaktion ist naturgemäß eine wässrige Lösungspolymerisation, oder eine Lösungspolymerisation in einem Lösungsmittelgemisch, das Wasser beinhaltet.

Dem Fachmann ist auch leicht einsichtig, dass eine Substanzpolymerisation oder eine Emulsionspolymerisation noch ungeeigneter sind, solche feuchtigkeitsvernetzenden, alkoxysilyl-funktionellen Polymere herzustellen. In der Substanzpolymerisation ist die Konzentration der funktionellen Gruppen besonders hoch und damit verbunden ist auch eine Erhöhung der Vernetzungswahrscheinlichkeit. Zumal einmal vorhandene Feuchtigkeit unter den Bedingungen einer Substanzpolymerisation besonders schnell zu Vernetzungen führen können. Daher ist bei der Wahl dieses Verfahrens gegenüber der Lösungspolymerisation auf einen noch geringeren Wassergehalt zu achten.

In der Emulsionspolymerisation findet eine essentielle Diffusion der Monomere durch die Wasserphase statt. Und damit verbunden ist eine erhöhte Wahrscheinlichkeit einer Hydrolyse bzw. der daran anschließenden Vernetzung.

In der Suspensionspolymerisation findet zwar keine direkte Diffusion der Monomere, und damit der Alkoxysilylgruppen-haltigen Bausteine durch die Wasserphase statt. Dafür ist jedoch eine Diffusion des Wassers in den Monomertropfen oder eine Position der Alkoxysilylgruppe an der Grenzfläche sogar sehr wahrscheinlich. Hinzu kommt, dass explizit in der Suspensionspolymerisation in der Regel Verteiler zum Einsatz kommen, die entweder einen sauren oder gar einen basischen Charakter aufweisen.

Dem Fachmann ist jedoch bekannt, dass die Hydrolyse-Empfindlichkeit der Alkoxysilylgruppen in einem neutralen pH-Bereich am geringsten ist. Somit ist der Einbau von Alkoxysilylgruppen in durch radikalische Suspensionspolymerisation hergestellte Bindemittel nach Stand der Technik unmöglich.

In US 5 204 404, EP 0 841 355, EP 0 943 634 und EP 0 932 083 werden Emulsionspolymerisationsverfahren zur Herstellung von silylfunktionellen Polymethacrylaten offenbart. Solche Polymere weisen jedoch auf Grund der Herstellungsmethode sehr hohe Molekulargewichte von zumeist über 500 000 auf. Daher müssen solche Polymere in einer Lackzusammensetzung mit großen Mengen niedermolekularer Bindemittel oder molekularen Verbindungen formuliert werden. In US 5 204 404 handelt es sich dabei beispielsweise um Polyester-basierte Polyurethane. In EP 0 841 355. in EP 0 943 634 und in EP 0 932 083 handelt es sich jeweils um ein Silikonharz. Hier ist die Formulierung nur als wässrige Dispersion applizierbar.

In WO 2004/011044 wird eine entsprechende Lösungspolymerisation eines silylfunktionellen Poly(meth)acrylats zur direkten Oberflächenmodifikation von Superabsorber-Partikeln (also Polyacrylsäure) offenbart. Solche Lösungspolymerisate wiederum haben eher geringe Molekulargewichte, die für Lackanwendungen z.B. eher nachteilig sind. Ferner muss zur Verwendung in einem Lack, das zur Polymerisation eingesetzte Lösungsmittel als Grundlage des Lacks eingesetzt werden oder aber erst aufwendig entfernt werden.

### Aufgabe

Aufgabe der vorliegenden Erfindung ist die Bereitstellung neuartiger Bindemittel für Formulierungen, die unter Feuchtigkeit aushärten, und ein Verfahren zur Synthese der neuartigen Bindemittel.

Insbesondere besteht die Aufgabe, Bindemittel zur Verfügung zu stellen, die mit den meisten Zuschlagsstoffen oder Co-Bindemitteln co-formulierbar sind.

Darüber hinaus ist eine weitere Aufgabe, Bindemittel zu entwickeln, die auf einem breiten Spektrum von Substraten gute Hafteigenschaften zeigen.

Insbesondere ist es die Aufgabe, ein Verfahren zur Synthese dieser Bindemittel zur Verfügung zu stellen, das einfach und ohne schädliche Lösungsmittel durchführbar ist.

Darüber hinaus besteht die Aufgabe, ein Syntheseverfahren zur Synthese von feuchtigkeitsvernetzenden Bindemitteln, die eine hohe Lagerstabilität aufweisen und ohne vorherige Aktivierung einsetzbar sind, zur Verfügung zu stellen.

Weitere nicht explizit genannte Aufgaben ergeben sich aus dem Gesamtzusammenhang der nachfolgenden Beschreibung, Ansprüche und Beispiele.

### Lösung

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Die Aufgaben werden gelöst durch die Entwicklung eines neuartigen, Silylgruppen tragenden Bindemittels, welches dadurch gekennzeichnet ist, dass es sich bei dem Bindemittel um ein Poly(meth)acrylat handelt, und dass dieses Poly(meth)acrylat nach der Polymerisation in einem auf einer Wasserphase basierenden Polymerisationsmedium als unvernetzter Feststoff anfällt. Insbesondere wurde die Aufgabe dadurch gelöst, dass das (Meth)acrylatpolymer Alkoxysilylgruppen aufweist und mittels Suspensionspolymerisation hergestellt wird.
Das neuartige Poly(meth)acrylat kann als feuchtigkeitsvernetzendes Bindemittel in Beschichtungsformulierungen wie beispielsweise Lacken, Heißsiegellacken, Dichtmassen, Klebstoffen oder Grundierungslacken eingesetzt werden und nach der Applikation alleine oder mit anderen Formulierungsbestandteilen mittels zugesetzter oder aus der Umgebungsatmosphäre eindiffundierende Feuchtigkeit vernetzen.

Poly(meth)acrylate haben den großen Vorteil, dass sie mit den meisten gängigen Polymeren, die z.B. in Beschichtungsformulierungen als Cobindemittel eingesetzt werden können, an sich oder durch Zusatz einer kleinen Menge eines Verträglichkeitsvermittlers mischbar sind. Dabei kann es sich beispielsweise um Polyether, Polyester, Polyurethane, Polycarbonate, andere Poly(meth)acrylate, Polystyrole, Polyvinylchloride, überwiegend amporphe Polyolefine oder teilkristalline Polyolefine handeln. Eine entsprechend hohe Formulierungsfreiheit haben Poly(meth)acrylate mit Füllstoffen, Stabilisatoren, Pigmenten, Dispergiermitteln, Emulgatoren, Haftvermittlern, Reaktivverdünnern, Entschäumern oder anderen in Beschichtungsformulierungen üblichen Additiven und/oder Zuschlagsstoffen.

Poly(meth)acrylate weisen zudem ein hohes Haftungsspektrum gegenüber einer Vielzahl von Untergründen wie z.B. auf einer Reihe Kunststoffoberflächen auf. Durch Zusatz eines geeigneten Haftvermittlers oder durch zusätzlichen Einbau geeigneter funktioneller Gruppen in das erfindungsgemäße Polymer kann das Haftungsspektrum auf weiteren Substraten wie z.B. auf diversen Metalloberflächen, Glas, Holz oder anderen Kunststoffen verbessert werden.

Ein besonderer Effekt der vorliegenden Erfindung ist, dass auch ohne zusätzliche funktionelle Gruppen oder Haftvermittler, die Haftung im Vergleich zu nicht erfindungsgemäßen, nicht silylfunktionellen Poly(meth)acrylaten auf diversen zusätzlichen Substraten deutlich verbessert werden konnte. Dies ist auf die eingebauten Alkoxysilylgruppen zurückzuführen. Dies betrifft insbesondere Glas, Keramik, mineralische Füllstoffe wie Gips oder Kalkstein, einige Metalle wie ganz besonders Aluminium und diverse Kunststoffsubstrate wie beispielsweise Polystyrol. Die Breite der Substrate, auf denen eine Haftungsverbesserung durch das neue, erfindungsgemäße Bindemittel erreicht werden konnte, ist durchaus überraschend gefunden worden.

Ein weiterer wichtiger Aspekt der vorliegenden Erfindung ist das Herstellungsverfahren, mittels dessen das erfindungsgemäße Bindemittel verfügbar ist. Überraschend wurde gefunden, dass ein Poly(meth)acrylat mit Alkoxysilylgruppen mittels Suspensionspolymerisation herstellbar ist. Obwohl es sich um ein auf einer Wasserphase basierendes Verfahren handelt, lassen sich Alkoxysilylgruppen, besonders überraschend sogar besonders hydrolyseempfängliche Trimethoxysilylgruppen ohne vorherigen Einbau von Schutzgruppen direkt in Polymethacrylate einbauen, ohne dass es zu einer Vernetzung der Polymerisate kommt. Nach der Abtrennung der Suspensionspolymerisate aus der Wasserphase - bevorzugt durch Filtration - und eine anschließende Trocknung sind die Produkte für mindestens eine Woche, bevorzugt für mindestens einen Monat, besonders bevorzugt für mindestens zwei Monate lagerstabil. Lagerstabil heißt in diesem Zusammenhang, dass die mittels SEC (size exclusion chromatography bzw. Gelpermeationschromatographie) ermittelte massenmittlere Molmasse M_{w} nach Lagerung nicht um mehr als 5 % zugenommen hat. Die Werte der zahlenmittleren Molmasse Mₙ, der massensmittleren Molmasse M_{w} und der Polydispersität D wurden als arithmetisches Mittel einer Doppelbestimmung in Tetrahydrofuran gegenüber einem PMMA-Standard bestimmt. Weiterhin müssen die Suspensionspolymerisate nach der angegebenen Zeit in einem geeigneten Lösungsmittel vollständig, ohne Vorliegen von Schwebteilchen oder anderen Feststoffen löslich sein.

Großer Vorteil der Suspensionspolymerisation ist, dass sie ohne Lösungsmittel durchgeführt werden kann und im Vergleich zur Emulsionspolymerisation werden weniger Hilfs- und Zusatzstoffe benötigt. Das Bindemittel liegt nach der erfindungsgemäßen Herstellung absolut lösungsmittelfrei vor. Der Begriff Lösungsmittel umfasst in diesem Zusammenhang explizit keine Substanzen wie Monomere oder Regler, die unter Polymerisationsbedingungen reaktiv sind oder Wasser. Lösungsmittelfrei umschreibt in diesem Zusammenhang einen Gehalt nicht reaktiver volatiler Substanzen kleiner 0,5 Gew%, bevorzugt kleiner 0,1 Gew% und besonders bevorzugt kleiner 0,01 Gew%.

Ein besonderer Aspekt der vorliegenden Erfindung ist, dass die Suspensionspolymerisation für Systeme, die Alkoxysilylgruppen enthalten, dergestalt optimal abgestimmt wurde, dass eine Vernetzung trotz hoher Polymerausbeute und gutem Funktionalisierungsgrad verhindert werden konnte.

So wurde überraschend gefunden, dass die Copolymerisation der erfindungsgemäßen silylfunktionalisierten Verbindungen nur in einem Suspensionspolymerisationssystem mit einem Schutzkolloid als Suspendiermittel, d.h. wasserlösliche organische Polymere, wie beispielsweise Polyvinylalkohol oder einer teilionisierten Poly(meth)acrylsäure, nicht jedoch unter Verwendung eines Pickering-Emulgators (S. Pickering, J. Chem. Soc. 1907, 91, 2001.), d.h. einer feinverteilten, wasserunlöslichen, metallhaltigen Substanz wie Aluminiumhydroxid oder Bariumsulfat durchführbar ist.

Bei den erfindungsgemäßen silylfunktionalisierten Verbindungen, die zur Funktionalisierung der Poly(meth)acrylate in der Polymerisation eingesetzt werden, handelt es sich im Allgemeinen um Verbindungen der Form

Z-R³-Si(OR¹)_{b}R²ₐX_{c}.

Dabei steht R³ für einen Alkylrest mit einem bis 20 Kohlenstoffatomen, der linear, cylclisch oder verzweigt sein kann. Bevorzugt sind lineare Alkylreste R³ mit einem bis 10 Kohlenstoffatomen. Insbesondere bevorzugt sind Verbindungen, bei denen es sich bei R³ um einen zweibindigen -CH₂-, - CH₂CH₂- oder einen -(CH₂)₃- Rest handelt.

Bei R¹ bzw. R² handelt es sich um organische Reste, die jeweils identisch oder verschieden zueinander sind und ausgewählt aus der Gruppe der aliphatischen Kohlenwasserstoffreste bestehend aus 1 bis 20 Kohlenstoffatomen die linear, verzweigt oder cyclisch sind, R¹ kann dabei auch ausschließlich Wasserstoff sein,
X ausgewählt aus der Gruppe der hydrolisierbaren Reste, die ungleich Alkoxy bzw. Hydroxy sind,
Auch können sowohl R¹ als auch R² für identische oder jeweils für verschiedene Gruppen in der Silylverbindung stehen. Im Einzelnen können R¹ und R² beispielsweise folgende Bedeutungen haben: Methyl-, Ethyl-, Propyl-, isoPropyl, n-Butyl-, Isobutyl-, tert.-Butyl-, Pentyl-, Cyclopentyl-, Hexyl-, Cyclohexyl-, Heptyl-, Octyl-, Isooctyl-, Ethylhexyl-, Nonyl-, Decyl-, Eicosyl-, Isobornyl-, Lauryl- oder Stearyl-.

In einer anderen Ausführungsform kann es sich bei R¹ und/oder R² auch um Kohlenwasserstoffgruppen mit etherischem Sauerstoff bzw. kurze Polyethersequenzen handeln. Solche Verbindungen sind beispielsweise in DE 10 2005 057 801 beschrieben.

In einer bevorzugten Ausführungsform handelt es sich bei R² um lineare Alkylreste. In einer besonders bevorzugten Ausführungsform handelt es sich bei R² um Methyl- und/oder Ethylgruppen.

a, b und c sind jeweils ganze Zahlen zwischen 0 und 3 und die Summe von a, b und c ergibt 3. In einer bevorzugten Ausführungsform ist c = 0, a = 0 oder 1 und b = 2 oder 3. In einer besonders bevorzugten Ausführungsform sind a und c = 0 und b = 3.

Als Beispiele für die Silylreste seien -Si(OMe)₃, -SiMe(OMe)₂, -SiMe₂(OMe), - Si(OPh)₃, -SiMe(OPh)₂, -SiMe₂(OPh), -Si(OEt)₃, -SiMe(OEt)₂, -SiMe₂(OEt), - Si(OPr)₃, -SiMe(OPr)₂, -SiMe₂(OPr), -SiEt(OMe)₂, -SiEtMe(OMe), -SiEt₂(OMe), - SiPh(OMe)₂, -SiPhMe(OMe), -SiPh₂(OMe), -SiMe(OC(O)Me)₂, - SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen.

Z steht für eine Gruppe, die in der radikalischen Polymerisation von Methacrylaten und/oder Acrylaten in die Kette eingebaut werden kann. Dabei kann es sich zum einen um eine copolymerisierbare Gruppe handeln, zum andere um eine Gruppe, die als Regler bzw. Kettenübertragungsreagenz in der radikalischen Polymerisation wirkt.

Im Falle eines Monomers handelt es sich bei Z um eine Gruppe, die in irgendeiner Form mit Acrylaten bzw. Methacrylaten copolymerisierbar ist. Beispiele dafür sind Vinyl-, Acryl- und Methacrylgruppen. Bevorzugt handelt es sich um eine Methacrylgruppe.

Als Beispiele für die (Meth)acrylreste seien H₂C=CHC(O)O-CH₂-, H₂C=CCH₃C(O)O-CH₂-, H₂C=CHC(O)O-(CH₂)₂-, H₂C=CCH₃C(O)O-(CH₂)₂-, H₂C=CHC(O)O-(CH₂)₃- bzw. H₂C=CCH₃C(O)O-(CH₂)₃- aufgeführt.

Ein kommerziell verfügbares Monomer wäre zum Beispiel Dynasylan^{®} MEMO der Firma Evonik-Degussa GmbH. Dabei handelt es sich um 3-Methacryloxypropyltrimethoxysilan.

Der Anteil der silyl-funktionalisierten Monomere an der Gesamtmenge Monomere kann zwischen 0,1 Gew.-% und 20 Gew.-%, bevorzugt zwischen 0,5 Gew.-% und 10 Gew.-% und insbesondere bevorzugt zwischen 1 Gew.-% und 5 Gew.-% liegen.

Im Falle einer kettenübertragenden Verbindung bzw. eines Reglers handelt es sich bei Z um eine Gruppe, die eingesetzt wird, um den Polymerisationsgrad der entstehenden Makromoleküle zu begrenzen. Im Gegensatz zu den Inhibitoren zerstören sie jedoch nicht die wachstumsfähigen Radikal-Funktionalitäten, sondern übernehmen diese von den Enden des wachsenden Makromoleküls, um damit dann selbst das Wachstum einer neuen Kette auszulösen. Bei diesen Gruppen kann es sich beispielsweise um Mercapto-Aldehyde-, Di- bzw. Trihalogenmethyl- oder Acetal-Gruppen handeln. Besonders bevorzugt sind in diesem Fall Mercaptogruppen.

Bei den insbesondere bevorzugten regelnden Verbindungen handelt es sich um kommerziell leicht verfügbare Verbindungen, die z.B. als Haftvermittler große industrielle Bedeutung haben. Vorteil dieser Verbindungen ist ihre leichte Verfügbarkeit und ihr niedriger Preis. Ein Beispiel einer solchen Verbindung stellt 3-Mercaptopropyltrimethoxysilan, das von der Evonik Degussa GmbH unter dem Namen DYNALYSAN^{®} MTMO vertrieben wird, dar. Weitere verfügbare Silane sind 3-Mercaptopropyltriethoxysilan oder 3-Mercaptopropylmethyldimethoxysilan (Fa. ABCR). Besonders reaktiv sind die so genannten α-Silane. In diesen Verbindungen sind die Mercaptogruppe und die Silangruppe an das gleiche Kohlenstoffatom gebunden (R¹ ist also in der Regel -CH₂-). Entsprechende Silangruppen solcher Art sind besonders reaktiv und können somit in der späteren Formulierung zu einem breiteren Anwendungsspektrum führen. Beispiel für eine solche Verbindung wäre Mercaptomethylmethyldiethoxysilan (Fa. ABCR).

Der Anteil der silyl-funktionalisierten Regler bezogen auf die Gesamtmenge Monomere kann zwischen 0,05 Gew.-% und 5 Gew.-%, bevorzugt zwischen 0,1 Gew.-% und 5 Gew.-% liegen.

Die erfindungsgemäß verwendeten Poly(meth)acrylate setzen sich im Allgemeinen aus Monomeren, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl-(meth)acrylat, Pentyl(meth)acrylat, 2-Ethylhexyl(meth)acrylat, Stearyl-(meth)acrylat, Lauryl(meth)acrylat, Cyclohexyl(meth)acrylat, Isobornyl-(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyl-oxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe außer den bereits beschriebenen Silylgruppen, wie a,β-ungesättigte Carbonsäuren, beispielsweise Acrylsäure oder Methacrylsäure; Ester der Acrylsäure oder Methacrylsäure mit zweiwertigen Alkoholen, beispielsweise Hydroxyethylacrylat, Hydroxyethylmethacrylat, Hydroxypropylacrylat oder Hydroxypropylmethacrylat; Acrylamid oder Methacrylamid; Dimethylaminoethylacrylat oder Dimethylaminoethylmethacrylat. Weitere geeignete Bestandteile von Monomergemischen sind beispielsweise Glycidylacrylat oder Glycidylmethacrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpyrrolidon, N-Vinylpyrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Im Einzelnen wird das Poly(meth)acrylat nach Anteil und Zusammensetzung zweckmäßigerweise im Hinblick auf die gewünschte technische Funktion gewählt werden.

Die erfindungsgemäß verwendeten Poly(meth)acrylate werden mittels Suspensions- oder Miniemulsionspolymerisation hergestellt.

Die Polymerisation wird im Allgemeinen mit bekannten Radikalinitiatoren gestartet. Zu den bevorzugten Initiatoren gehören unter anderem die in der Fachwelt weithin bekannten Azoinitiatoren, wie AIBN, 2,2'-Azobis2-methylbutyronitril und 1,1-Azobiscyclohexancarbonitril, sowie Peroxyverbindungen, wie Methylethylketonperoxid, Acetylacetonperoxid, Dilaurylperoxid, Didecanoylperoxid, tert.-Butylper-2-ethylhexanoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Amylperoxy-2-ethylhexanoat, tert.-Butylperoxy-2-ethylhexanoat, tert.-Butylperoxy-pivalat, tert.-Butylperoxy-3,5,5-trimethylhexanoat, 1,1-Bis(tert.-butylperoxy)cyclohexan, 1,1-Bis(tert.-butylperoxy)-3,3,5-trimethylcyclohexan, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,1 bis 5,0 Gew.-%, vorzugsweise von 0,3 bis 2,0 Gew.-%, bezogen auf das Gesamtgewicht der Monomeren, eingesetzt.

Gegebenenfalls können zur Einstellung des gewünschten Molekulargewichts anstelle der silyl, funktionellen Regler Verbindungen eingesetzt werden, die regelnd wirken und über keine weitere Funktionalität oder über eine von Silylgruppen abweichende weitere Funktionalität wie zum Beispiel Hydroxylgruppen verfügen. Als Regler eignen sich z.B. Schwefelregler, insbesondere mercaptogruppenhaltige Regler, z.B. Dodecylmercaptan, Ethylhexylmercaptan oder Mercaptoethanol. Wenn Regler verwendet werden, liegt die Konzentrationen im Allgemeinen bei 0,05 Gew.-%, bis 5,0 Gew.-%, bezogen auf das Gesamtpolymerisat.

Das Verhältnis Wasser zu Monomer liegt üblicherweise im Bereich von 0,9:1 bis 20:1, bevorzugt von 1:1 bis 4:1, bezogen auf das Gewicht der Komponenten.

Die Polymerisation kann bei Normaldruck, Unter- oder Überdruck durchgeführt werden. Auch die Polymerisationstemperatur ist unkritisch. Im Allgemeinen liegt sie jedoch im Bereich von 0°C bis 120°C, vorzugsweise von 50°C bis 100°C und besonders bevorzugt von 65°C bis 90°C.

Überraschend wurde gefunden, dass eine Suspensionspolymerisation mit Silylgruppen haltigen Bausteinen prinzipiell in der bei der Suspensionspolymerisation üblichen Weise ohne Gelierung durchgeführt werden kann. Bei einer diskontinuierlichen Ausführungsform wird beispielsweise die Wasserphase, welche das Suspendiermittel, und gegebenenfalls sonstige an sich übliche Zusätze bereits enthält, in einem geeigneten Polymerisationsgefäß vorgelegt und es wird die Monomerphase, die in der Regel bereits die monomerlöslichen Zusatzstoffe wie Initiatoren oder Kettenregler gelöst enthält, unter Rühren zugegeben. In der Monomerphase wird auch das Silyl-funktionalisierte Monomer zugegeben. Bei den Suspendiermitteln handelt es sich um organische Schutzkolloide, d.h. wasserlösliche organische Polymere. Sie erhöhen u.a. die Viskosität der Suspension und erniedrigen so die Wahrscheinlichkeit für den Zusammenstoß zweier Tröpfchen. Typische wasserlösliche Polymere, die als Schutzkolloide Verwendung finden, sind Polyvinylalkohol bzw. Poly(vinylalkohol-co-vinylacetat), Poly(meth)acrylsäure bzw. teilionisierte Poly(meth)acrylsäure bzw. teilionisierte Copolymere der (Meth)acrylsäure, Polyethylenglykol oder Poly(2-oxazoline). Zu den bevorzugten Suspendiermitteln gehören Polyvinylalkohol bzw. Poly(vinylalkohol-co-vinylacetat) und teilionisierte Poly(meth)acrylsäure bzw. teilionisierte Copolymere der (Meth)acrylsäure. So genannte Pickering-Emulgatoren, bei denen es sich um feinverteilte, wasserunlösliche Substanzen wie Aluminiumhydroxid oder Bariumsulfat handelt, sind zur Herstellung der erfindungsgemäßen Bindemittel dagegen nicht geeignet.

Der im Polymerisationssystem enthaltene Luftsauerstoff wird zweckmäßigerweise durch Evakuieren und Beaufschlagung mit Stickstoff entfernt. Die Polymerisation wird durch Aufheizen des Ansatzes in Gang gebracht. Das Monomer-Wasser-Verhältnis liegt in der Regel zwischen 1 : 4 und 1 : 1. Die Polymerisationstemperatur liegt Üblicherweise zwischen etwa 65 und etwa 90 °C. Je nach dem angewandten Monomer-Wasser-Verhältnis erfolgt die Polymerisation adiabatisch oder unter zumindest teilweiser Abführung der Polymerisationswarme durch Kühlung. Nach beendeter Polymerisation wird der Ansatz abgekühlt und die gebildeten Polymerisatperlen werden durch Filtration oder Zentrifugation abgetrennt. Zweckmäßigerweise werden sie gleich auf dem Filter oder in der Zentrifuge mit Wasser ausgewaschen. Anschließend werden sie in einem geeigneten Trockner, beispielsweise in einem Trockenofen oder in einem Wirbelschichttrockner getrocknet.

Das erfindungsgemäß hergestellte Bindemittel liegt nach Filtration und Trocknung als Feststoff mit einer mittleren Partikelgröße zwischen 50 µm und 1 mm, bevorzugt mit einer mittleren Partikelgröße zwischen 100 µm und 600 µm vor. Die Partikelgröße bezieht sich auf den Partikeldurchmesser. Dieser Wert kann beispielsweise durch Laserextinktionsverfahren bestimmt werden. Hierzu kann ein CIS Teilchen-Analysator der Firma L.O.T. GmbH verwendet werden, wobei die Meßmethode zur Bestimmung der Teilchengröße im Benutzerhandbuch enthalten ist. Diese Methode ist bevorzugt. Darüber hinaus kann die Teilchengröße durch Messen und Auszählen der Teilchen auf entsprechenden Rasterelektronenmikroskop-Aufnahmen ermittelt werden.

Das neuartige Poly(meth)acrylat findet, eine bevorzugte Verwendung als feuchtigkeitsvernetzende Komponente in Beschichtungsformulierungen wie beispielsweise Lacken, Heißsiegellacken, Dichtmassen, Klebstoffen oder Grundierungslacken. Nach der Applikation findet die Vernetzungsreaktion alleine oder mit anderen Formulierungsbestandteilen mittels zugesetzter oder aus der Umgebungsatmosphäre eindiffundierender Feuchtigkeit statt.

Die ein erfindungsgemäßes Bindemittel enthaltenden Beschichtungsformulierungen können weitere Bestandteile wie Füllstoffe beinhalten, wobei die Füllstoffe eingesetzt werden, um spezielle Eigenschaftsprofile einer Beschichtung, wie z. B. den Temperaturanwendungsbereich, mechanische Eigenschaften wie Festigkeit und E-Modul, die thermische Ausdehnung, die elektrische.Leitfähigkeit, den Magnetismus und/oder die Wärmeleitfähigkeit gezielt an spezifische Anforderungen anzupassen. Allgemein handelt es sich bei den Füllstoffen um anorganische und/oder organische Füllstoffe. Die anorganischen Füllstoffe sind insbesondere ausgewählt aus Kieselsäuren (inkl. hydrophobierte Kieselsäuren), Quarzmehl, Kreiden, Titandioxid, Zinkoxid, Zirkonoxid (letztere drei vorzugsweise in nanoskaliger Form), Schwerspat, Glaspartikeln (insbesondere sphärischen Partikeln zur Erhöhung der Lichtreflexion), Glasfasern, Kohlefasern, Asbestpartikeln, Asbestfasern und/oder Metallpulvern. Organische Füllstoffe sind beispielsweise Ruß, Bitumen, vernetztes Polyethylen, vernetzte Kautschuk- bzw. Gummimischungen, synthetische Fasern wie z. B. Polyethylenfasern, Polypropylenfasern, Polyesterfasern, Polyamidfasern, Aramidfasern, Saranfasern, MP-Fasern oder Naturfasern wie Stroh, Holz, Wolle, Baumwolle, Seide, Flachs, Hanf, Jute, und/oder Sisal.

Ebenfalls können die weiteren Bestandteile Vernetzungsbeschleuniger umfassen. Dies ist besonders dann bevorzugt, wenn die erfindungsgemäßen Polymere in einer Verklebung eingesetzt werden, die in kurzer Zeit nach der Fügung ihre maximale Belastbarkeit erreichen soll. Als Vernetzungsbeschleuniger für feuchtigkeitshärtende Formulierungen eignen sich eine Vielzahl von chemischen Verbindungen, die dem Fachmann bekannt sind.

Ebenfalls können die weiteren Bestandteile Stabilisatoren umfassen, wobei diese eingesetzt werden, um die Klebstoffformulierung vor externen Einflüssen wie z. B. dem Einfluss von (Verarbeitungs-)Wärme, Scherbeanspruchung, Sonneneinstrahlung, Luftfeuchtigkeit und Sauerstoff zu schützen.

Weiterhin können in den Beschichtungsformulierungen anorganische und/oder organische Pigmente, UV-aktive Substanzen, organische und/oder anorganische Nukleierungsmittel, die die Kristallisation der Polymere beschleunigen und damit die offene Zeit der Verklebung reduzieren, enthalten sein.

Bei den beschichteten Oberflächen kann es sich zum Beispiel um die Oberflächen von Folien, Granulaten, spritzgegossenen oder auf eine andere Art hergestellten Formteilen, Verbundmaterialien oder Laminaten handeln. Im Weiteren werden alle diese Darreichungsformen unter dem Begriff "Werkstück" zusammengefasst.

Die auf diese Weise beschichteten Werkstücke können Verwendung finden in der Verpackungsindustrie, z.B. für Lebensmittel oder pharmazeutische Produkte, dem Automobilbau, dem Schiffsbau, der Elektronikindustrie, der Bauindustrie, dem Möbelbau, dem Maschinenbau oder der Herstellung von Spielwaren.

Die Beschichtungsformulierung kann als 100% System ohne Zusatz verdünnender Substanzen oder als Lösung eingesetzt werden. Bei der Applikation aus Lösung wird die Formulierung zuvor in beliebigen, bevorzugt technisch etablierten Lösungsmitteln wie H₂O; Acetaten, vorzugsweise Butylacetat, Ethylacetat, Propylacetat; Ketonen, vorzugsweise Ethylmethylketon, Aceton; Ethern; Aliphaten, vorzugsweise Pentan, Hexan; Aromaten, wie Toluol, Xylol oder Naphtha; Biodiesel; aber auch Weichmachern wie niedrigmolekulare Polypropylenglycolen oder Phthalaten gelöst.

Die Beschichtung mit der Lack- bzw. Klebformulierung kann zum Beispiel analog zum Coil Coating über Walzen erfolgen. Die Grundierung kann auch auf die Oberfläche gesprüht oder lackiert werden. Ferner können auch Methoden wie das Spin Coating oder das Tauchlackieren zur Anwendung kommen. Ferner ist es ebenfalls möglich, das Lösungsmittel vor dem Auftragen zu entfernen und die Substratoberfläche mittels Extrusionsbeschichtung oder Coextrusion zu grundieren.
In einer bevorzugten Ausführungsform wird der Haftvermittler als Substanzpolymer bzw. getrocknetes Lösungspolymerisat in einem 100%-System, z.B. für Schmelzanwendungen formuliert.

### Beispiele

### Beispiel 1

In einen 5L Polymerisationsgefäß mit Heiz-Kühlmantel, ausgestattet mit Rührer und Rückflußkühler werden 3200 mL vollentsalztes Wasser vorgelegt, der Rührer auf eine Drehzahl von 300 Umdrehungen pro Minute eingestellt und auf eine Außentemperatur von 40 °C aufgeheizt. Es werden 70 g einer 10%igen wässrigen Lösung von Polyvinylalkohol (Hydrolysegrad: 88 mol%) und 0,5 g einer 40 %igen wässrigen Lösung von Natrium-Nitrilotriacetat zugegeben und durch Rühren verteilt. In einem Becherglas werden 1240 g (77,5 %) n-Butylmethacrylat, 280 g (17,5 %) Methylmethacrylat, 80 g (5 %) Dynasylan^{®} MEMO, 8,3 g Peroxan LP und 6,1 g TGEH gemischt und unter Rühren homogenisiert. Die Monomerstammlösung wird in den Reaktor gepumpt. Die Innentemperatur wird auf 75 °C geregelt. Die Polymerisation ist beendet, wenn die Wärmeentwicklung abbricht. Der Ansatz wird abgekühlt. Durch eine Filter-Nutsche wird die Mutterlauge von den Polymerperlen abgetrennt, gründlich mit vollentsalztem Wasser gewaschen und im Trockenschrank bei 30 °C getrocknet.

| Lagerzeit / w | Mₙ / g/mol | M_{w} / g/mol | D |
|---|---|---|---|
| 0 | 54800 | 106100 | 1,94 |
| 2 | 55200 | 106600 | 1,93 |
| 4 | 58900 | 109000 | 1,85 |
| 8 | 53000 | 109300 | 2,06 |

## Patentansprüche

1. Polymerisationsverfahren zur Synthese von feuchtigkeitsvernetzenden Bindemitteln, **dadurch gekennzeichnet, dass**
es sich bei dem Bindemittel um ein Poly(meth)acrylat handelt,
dass das Bindemittel Silylgruppen aufweist,
dass das Polymerisationsverfahren als Suspensionspolymerisation mit einem Schutzkolloid in einem auf einer Wasserphase basierenden Polymerisationsmedium, dessen Gehalt nicht reaktiver volatiler Substanzen kleiner 0,5 Gew% ist, durchgeführt wird und
dass das Bindemittel nach der Polymerisation, anschließender Filtration und Trocknung als unvernetzter Feststoff anfällt.

2. Verfahren gemäß Anspruch 1, **dadurch gekennzeichnet, dass** die Silylgruppen, bevorzugt Alkoxysilylgruppen durch Vorliegen von Verbindungen der allgemeinen Form
Z-R³-Si(OR¹)_{b}R²ₐX_{c}
in die Polymerkette eingebaut werden,
wobei R¹, R² und R³ jeweils identisch oder verschieden zueinander sind und für Alkylreste mit einem bis 20 Kohlenstoffatomen, die linear, cyclisch oder verzweigt sein können, oder im Fall von R¹ auch für Wasserstoff stehen, wobei R³ zwingend zweibindig ist,
X ausgewählt aus der Gruppe der hydrolisierbaren Reste, die ungleich Alkoxy bzw. Hydroxy sind,
a, b und c jeweils für ganze Zahlen zwischen 0 und 3 stehen und die Summe von a, b und c 3 ergibt, und
es sich bei Z um eine Gruppe handelt, die in der radikalischen Polymerisation von (Meth)acrylaten in die Kette eingebaut werden kann.

3. Verfahren gemäß Anspruch 2, **dadurch gekennzeichnet, dass** es sich bei Z um eine ungesättigte, radikalisch polymerisierbare Gruppe, bevorzugt um eine Acryl- oder Methacrylgruppe handelt.

4. Verfahren gemäß Anspruch 3, **dadurch gekennzeichnet, dass** der Anteil der Silylgruppen aufweisenden, radikalisch polymerisierbaren Verbindungen an der Gesamtmenge Monomere zwischen 0,1 Gew.-% und 20 Gew.-%, bevorzugt zwischen 1 Gew.-% und 5 Gew.-% liegt.

5. Verfahren gemäß Anspruch 2, **dadurch gekennzeichnet, dass** es sich bei Z um eine kettenübertragende Gruppe wie eine Mercapto-, Aldehyd- oder Acetal-Gruppe, bevorzugt um eine Mercaptogruppe, handelt.

6. Verfahren gemäß Anspruch 5, **dadurch gekennzeichnet, dass** der Anteil der Silylgruppen aufweisenden, kettenübertragenden Verbindungen bezogen auf die Gesamtmenge Monomere zwischen 0,05 Gew.-% und 5 Gew.-%, bevorzugt zwischen 0,1 Gew.-% und 2 Gew.-% liegt.

7. Verfahren gemäß einem der vorhergehenden Ansprüche, **dadurch gekennzeichnet, dass** die Suspensionspolymerisation unter Verwendung eines
Schutzkolloids als Suspendiermittel und ohne Zugabe einer wasserunlöslichen, metallhaltigen Verbindung durchgeführt wird.

8. Verfahren gemäß Anspruch 7, **dadurch gekennzeichnet, dass** es sich bei dem Schutzkolloid um Polyvinylalkohol oder um eine teilionisierte Poly(meth)acrylsäure handelt.

9. Feuchtigkeitsvernetzendes Bindemittel auf (Meth)acrylatbasis herstellbar durch ein Verfahren gemäß einem der vorhergehenden Ansprüche, **dadurch gekennzeichnet, dass**
das Bindemittel Silylgruppen aufweist,
das Bindemittel frei von Lösungsmitteln ist,
das Bindemittel nach der Polymerisation als Feststoff mit einem mittleren Partikeldurchmesser, bestimmt mittels Laserextinktion, zwischen 50 µm und 1 mm, bevorzugt zwischen 100 µm und 600 µm vorliegt, und dass der Feststoff nach Filtration und Trocknung für mindestens eine Woche, bevorzugt für einen Monat, besonders bevorzugt für zwei Monate ohne Vernetzung lagerstabil ist, wobei lagerstabil bedeutet, dass die mittels SEC ermittelte massenmittlere Molmasse M_{w} nach Lagerung nicht um mehr als 5 % zugenommen hat.

10. Verwendung eines feuchtigkeitsvernetzenden Bindemittels gemäß Anspruch 9 in Beschichtungsformulierungen, bevorzugt in Lacken, Heißsiegellacken, Dichtmassen, Klebstoffen oder Grundierungslacken.

11. Verwendung gemäß Anspruch 10, **dadurch gekennzeichnet, dass** das feuchtigkeitsvernetzende Bindemittel nach der Applikation allein oder mit anderen Bestandteilen der Beschichtungsformulierung mittels Feuchtigkeit vernetzt.

## Claims

1. Polymerization process for the synthesis of moisture-crosslinking binders, **characterized**
**in that** the binder is a poly(meth)acrylate,
**in that** the binder has silyl groups,
**in that** the polymerization process is carried out as a suspension polymerization with a protective colloid in a polymerization medium which is based on a water phase and contains less than 0.5 wt% of unreactive volatile substances, and
**in that** the binder, after the polymerization, subsequent filtration and drying, is obtained as a non-crosslinked solid.

2. Process according to Claim 1, **characterized in that** the silyl groups, preferably alkoxysilyl groups, are incorporated into the polymer chain through presence of compounds of the general form
Z-R³-Si(OR¹)_{b}R²ₐX_{c},
where R¹, R² and R³ are each identical to or different from one another and are alkyl radicals having one to 20 carbon atoms, and may be linear, cyclic or branched, or in the case of R¹ are alternatively hydrogen,
where R³ is necessarily divalent,
X is selected from the group of hydrolysable radicals which are not alkoxy or hydroxyl,
a, b and c are each integers between 0 and 3, and the sum of a, b and c is 3, and
Z is a group which in the radical polymerization of (meth)acrylates can be incorporated into the chain.

3. Process according to Claim 2, **characterized in that** Z is an unsaturated, radically polymerizable group, preferably an acryloyl or methacryloyl group.

4. Process according to Claim 3, **characterized in that** the proportion of the radically polymerizable compounds having silyl groups in the total amount of monomers is between 0.1 wt% and 20 wt%, preferably between 1 wt% and 5 wt%.

5. Process according to Claim 2, **characterized in that** Z is a chain-transferring group such as a mercapto, aldehyde or acetal group, preferably a mercapto group.

6. Process according to Claim 5, **characterized in that** the proportion of the chain-transferring compounds having silyl groups in the total amount of monomers is between 0.05 wt% and 5 wt%, preferably between 0.1 wt% and 2 wt%.

7. Process according to any of the preceding claims, **characterized in that** the suspension polymerization is carried out using a protective colloid as suspending agent and without addition of a water-insoluble, metal-containing compound.

8. Process according to Claim 7, **characterized in that** the protective colloid is polyvinyl alcohol or is a partly ionized poly(meth)acrylic acid.

9. (Meth)acrylate-based, moisture-crosslinking binder preparable by a process according to any of the preceding claims, **characterized in that**
the binder has silyl groups,
the binder is free from solvents,
the binder after the polymerization is present as a solid having an average particle diameter, determined by means of laser extinction, of between 50 µm and 1 mm, preferably between 100 µm and 600 µm, and **in that**
the solid after filtration and drying is storage-stable for at least one week, preferably for one month, more preferably for two months without crosslinking, storage-stable meaning that the mass-average molar mass M_{w} after storage, determined by means of SEC, has not increased by more than 5%.

10. Use of a moisture-crosslinking binder according to Claim 9 in coating formulations, preferably in paints, heat-sealing lacquers, sealants, adhesives or primer coating materials.

11. Use according to Claim 10, **characterized in that** the moisture-crosslinking binder, after application, alone or with other constituents of the coating formulation, crosslinks by means of moisture.

## Revendications

1. Procédé de polymérisation pour la synthèse de liants réticulables à l'humidité, **caractérisé en ce que** le liant consiste en un poly(méth)acrylate,
**en ce que** le liant comporte des groupes silyle,
**en ce que** le procédé de polymérisation est effectué en tant que polymérisation en suspension avec un colloïde protecteur dans un milieu de polymérisation à base d'une phase aqueuse, dont la teneur en substances volatiles non réactives est inférieure à 0,5 % en poids et
**en ce qu'**après la polymérisation, filtration subséquente et séchage le liant apparaît sous forme d'un solide non réticulé.

2. Procédé selon la revendication 1, **caractérisé en ce que** les groupes silyle, de préférence des groupes alcoxysilyle, sont incorporés dans la chaîne polymère par la présence de composés de formule générale
Z-R³-Si (OR¹)_{b}R²ₐX_{c},
où R¹, R² et R³ sont chaque fois identiques ou différents et représentent des radicaux alkyle ayant de 1 à 20 atomes de carbone, qui peuvent être linéaires, cycliques ou ramifiés, ou, dans le cas de R¹ peuvent également représenter un atome d'hydrogène,
R³ étant obligatoirement à deux liaisons,
X est choisi dans le groupe des radicaux hydrolysables, qui sont différents d'alcoxy ou d'hydroxy,
a, b et c représentent chacun des nombres entiers compris entre 0 et 3 et la somme de a, b et c est égale à 3, et
Z consiste en un groupe qui, dans la polymérisation radicalaire de (méth)acrylates, peut être incorporé dans la chaîne.

3. Procédé selon la revendication 2, **caractérisé en ce que** Z consiste en un groupe insaturé, polymérisable par voie radicalaire, de préférence un groupe acryloyle ou méthacryloyle.

4. Procédé selon la revendication 3, **caractérisé en ce que** la proportion de composés polymérisables par voie radicalaire, comportant des groupes silyle, est comprise entre 0,1 % en poids et 20 % en poids, de préférence entre 1 % en poids et 5 % en poids, par rapport à la quantité totale des monomères.

5. Procédé selon la revendication 2, **caractérisé en ce que** Z consiste en un groupe apte au transfert de chaîne, tel qu'un groupe mercapto, aldéhyde ou acétal, de préférence en un groupe mercapto.

6. Procédé selon la revendication 5, **caractérisé en ce que** la proportion des composés aptes au transfert de chaîne, comportant des groupes silyle, est comprise entre 0,05 % en poids et 5 % en poids, de préférence entre 0,1 % en poids et 2 % en poids, par rapport à la quantité totale de monomères.

7. Procédé selon l'une quelconque des revendications précédentes, **caractérisé en ce que** la polymérisation en suspension est effectuée avec utilisation d'un colloïde protecteur en tant qu'agent de mise en suspension et sans addition d'un composé contenant un métal, insoluble dans l'eau.

8. Procédé selon la revendication 7, **caractérisé en ce que** le colloïde protecteur consiste en poly(alcool vinylique) ou en un poly(acide (méth)-acrylique) partiellement ionisé.

9. Liant réticulable à l'humidité, à base de (méth)acrylate, pouvant être produit par un procédé selon l'une quelconque des revendications précédentes, **caractérisé en ce que**
le liant comporte des groupes silyle,
le liant est exempt de solvants,
le liant après la polymérisation est présent sous forme d'un solide ayant un diamètre moyen de particule, déterminé par extinction laser, compris entre 50 µm et 1 mm, de préférence entre 100 µm et 600 µm, et **en ce que** le solide après filtration et séchage est stable au stockage sans réticulation pendant au moins une semaine, de préférence pendant un mois, de façon particulièrement préférée pendant deux mois, stable au stockage signifiant que la masse moléculaire moyenne en masse M_{w}, déterminée par SEC, n'a pas augmenté de plus de 5 % après stockage.

10. Utilisation d'un liant réticulable à l'humidité selon la revendication 9, dans des compositions de revêtement, de préférence dans des laques, des laques thermoscellables, des matières d'étanchéité, des adhésifs ou des peintures d'apprêt.

11. Utilisation selon la revendication 10, **caractérisée en ce qu'**après l'application le liant réticulable à l'humidité réticule à l'aide d'humidité, seul ou avec d'autres composants de la composition de revêtement.
